Europäisches Patentamt

European Patent Office

Office européen des brevets

(11) Publication number: **0 075 371**
**B1**

## EUROPEAN PATENT SPECIFICATION

(45) Date of publication of patent specification: **14.05.86**

(51) Int. Cl.⁴: **G 01 N 30/00**

(21) Application number: **82201155.7**

(22) Date of filing: **17.09.82**

(54) **Improved liquid chromatographic method and apparatus with a packed tube membrane device for post-column derivation/suppression reactions.**

(30) Priority: **18.09.81 US 300143**

(43) Date of publication of application:
**30.03.83 Bulletin 83/13**

(45) Publication of the grant of the patent:
**14.05.86 Bulletin 86/20**

(84) Designated Contracting States:
**DE FR GB IT NL**

(56) References cited:
**EP-A-0 032 770**
**DE-B-1 258 631**
**US-A-3 920 397**

**ANALYTICAL CHEMISTRY, Vol. 50, No. 9, August 1978 Easton, Pennsylvania, USA J.G. DORSEY et al. "Characterization of the Ion-Exchange Membrane Detector for Liquid Chromatography and Its Application to the Separation of Quaternary Ammonium Compounds" pages 1330 to 1333 JOURNAL OF CHROMATOGRAPHIC SCIENCE, Vol. 17, March 1979, Niles, Illinois R.W. FREI et al. "Reaction Detectors in HPLC" pages 152 to 160**

(73) Proprietor: **DIONEX CORPORATION**
**1228 Titan Way**
**Sunnyvale California 94086 (US)**

(72) Inventor: **Stevens, Timothy Sean**
**5102 Foxcroft**
**Midland Michigan 48640 (US)**
Inventor: **Jewett, Gary Lew**
**5407 Gardenbrook**
**Midland Michigan 48640 (US)**
Inventor: **Bredeweg, Robert Allen**
**200 S. Eight Mile Road**
**Midland Michigan 48640 (US)**
Inventor: **Westover, Lemoyne Byron**
**4911 Barto**
**Midland Michigan 48640 (US)**
Inventor: **Small, Hamish**
**3810 Moorland**
**Midland Michigan 48640 (US)**

(74) Representative: **Urbanus, Henricus Maria, Ir. et al**
**c/o Vereenigde Octrooibureaux Nieuwe Parklaan 107**
**NL-2587 BP 's-Gravenhage (NL)**

# 0 075 371

**Description**

It is a primary object of this invention to provide liquid chromatographic apparatus and methods in which improved utility and flexibility are achieved in the practice and implementation of post column suppression and/or reagent addition reactions. It is particularly an object of the invention to provide such liquid chromatographic apparatus and method in which band spreading inherently produced by a post column suppressor or reactor device is controlled, and wherein the primary utility of producing an affective suppression or reagent addition reaction is simultaneously and effectively accomplished.

In conventional high performance liquid chromatography (HPLC), extra column band spreading is usually on the order, e.g., of about 50 to 100 µl or less and thus generally is not significantly detrimental to the analysis. This holds true also for the case of high performance analytical columns. However, where the additional element of a post-column reactor or suppressor device is used between the column and detector, some greater amount of band spreading is introduced. In the case of high performance analytical columns, for example, those having a resolution efficiency of about 20,000 theoretical plates or greater, such additional band spreading can be detrimental in its effect on detection sensitivity, and/or as a primary cause of sample interferences. The present invention, in this respect, provides a practical and effective solution for controlling sample band spreading in practicing post column derivatization and suppression reactions in the field of liquid chromatography.

Specifically, among liquid chromatographic systems which may be significantly improved by the teachings of this invention is the apparatus used in conventional Ion Chromatography, e.g., as described by H. Small in "Applications of Ion Chromatography in Trace Analysis", Academic Press, New York, Chapter entitled "Trace Analysis"; (see also, U.S.P. 3,920,397). Ion Chromatography is an analysis method which is based on a post-column suppression reaction. In this respect, a liquid sample placed in an ion exchange analytical column is displaced by an electrolyte eluent or mobile phase, and elutes in a hihgly conductive eluent background solution which interferes with sensitive conductimetric detection of the sample ions. A "suppressor" column comprising a bed of ion exchange particles is thus placed between the analytical column and a detector, and is used to selectively convert the electrolyte eluent to, e.g., deionized water or other weakly ionized background solutions in which the sample ions can be detected. However, because of detrimental band spreading only relatively small suppressor columns are useful in Ion Chromatography, and these columns require frequent regeneration of ion exchange resin in the column or replacement of the column or resin. Other critical restrictions are placed on the method such as the usable strength of the eluent solution. In addition, even with small suppressor columns, band spreading is nevertheless frequently on the order of, e.g., 300 µl, or in an amount which can degrade the resolution efficiencies of high performance chromatographic columns.

A variety of chemical reagents have been developed of a nature considered suitable for addition to liquid chromatographic effluent to enhance the detection sensitivity of eluted sample bands with reference to a specific detector (usually a photometer, fluorometer, or other detector) or to enhance their sensitivity with respect to interfering bands which overlap bands of interest. Various reagents and reagent reactions specifically contemplated as useful for liquid chromatography, are described in detail by Snyder et al. in *Introduction to Modern Liquid Chromatography*, 2nd Ed. (1979) 740—746. In this state of the art are also the reagents and reagent reactions taught by Gfeller et al., *Journal of Chromatography*, 142 (1977), pp. 271—281; Frei et al. and Jupille, *Journal of Chromatographic Science*, Vol. 17, March, 1979, pp. 152—159 and 160—167, respectively; and Vance Nau et al., *Analytical Chemistry*, Vol. 51, No. 3, March 1979, pp. 424—428. In spite of the longtime availability of the above and like prior art teachings, however, reagent addition chemistry has only infrequently been applied to past liquid chromatographic practices.

For example, Gfeller et al. stated that the use of such reaction techniques after column chromatographic separation has been known for more than a decade little has appeared in relation to modern high performance liquid chromatography. One reason is the many technical problems that still have to be solved.

Snyder et al, stated that the adaptation of reaction detection to modern LC column requires careful attention to the design of equipment, because extra column effects can be serious. For these reasons reaction detectors have so far found rather limited use in modern LC.

Among the above-referenced "extra column effects" are band spreading or band broadening. Frei et al., stated that the construction of proper reaction detectors comprises a constant struggle against band broadening. Jupille detected, in respect to reagent addition methods, a need for hardware modification (with attendant loss in flexibility) and a risk of band broadening due to post-column mixing volume resulting in loss of resolution.

The present invention discloses basically that packings or devices which produce radial mixing in channels (for example, tubes, columns or other passageways of varying cross-sectional shape) can be used in combination with membranes to develop suppressor devices for Ion Chromatography, and reagent addition devices for liquid chromatographic post column reactions in which excessive band spreading is effectively controlled.

In respect to differences over the prior art, the use of the membrane by itself is not new. Flat membranes, for example, have been suggested in the past for applications similar to the invention. The invention, however, is in the improvement achieved by a combination of a packing and a membrane which

2

**0 075 371**

has not been previously described. Additionally, in terms of technical differences, devices based on prior flat, sheetlike membranes have in the past been of a type particularly ineffectual in controlling excessive band spreading. These devices, therefore, are not comparable to the invention in terms of critical utility.

Another area of prior art which the invention defines concerns devices known as the "Hollow Fiber Suppressor" and "Hollow Fiber Post-Column Reactor". These are described respectively, in European Patent Application No. 812000495, by T. S. Stevens et al., entitled "Ion Analysis Method and Apparatus", filed January 15, 1981, and which was published July 29, 1981, under EP Publication No. 32,770; and European Patent Application No. 819021221, by J. C. Davis, entitled "Liquid Chromatographic Method and Apparatus with Hollow Fiber Device for Post Column Derivatization", filed July 10, 1981.

The most apparent difference between the invention and the prior art, is in the combination of the packing plus the membrane, since the former devices do not contemplate the combination, but the use of the membrane alone. The differences in utility, however, are very significant to the practitioners of liquid chromatography. This is not to say that the prior device of the hollow fiber suppressor, for example, is an unimportant development since it overcomes many of the published difficulties associated with a packed bed form of suppressor column. However, these benefits are achieved only at the expense of a penalty in excessive band spreading and this is the problem the present invention solves which makes the membrane technology of this invention significantly more valuable to liquid chromatographic analysis.

In specific reference to reagent addition reactions, as opposed to the above discussed suppression reactions, the technical contributions of the invention are viewed somewhat differently. Here, oftentimes, the most important benefit in that the invention advantageously permits the liquid chromatographic practitioner to select and use membranes and membrane structures previously thought to have little or no utility for post column reagent addition purposes. In this respect, because of severe band spreading, only very fine hollow fiber strands are taught to have utility for use in prior liquid chromatographic reactor devices (such as described by J. C. Davis, EP Application No. 81902122.1). Only a relatively few of the known membrane materials are thus, in fact, available in the form critically required by Davis. In contrast, the invention is not limited to the narrow field of hollow fibers in developing optimum membranes for liquid chromatographic reagent addition purposes, since the invention is not limited to a hollow fiber geometry in order to control detrimental band broadening.

The following definitions are provided by way of further explanation.

"Analytical Column" means any suitable chromatographic stationary phase usually on supports such as particles, or beads, but also other supports, e.g., capillaries and the like, useful in performing liquid chromatographic separations.

"Eluent" means a liquid mobile phase suitable for use with the analytical column for performing liquid chromatographic separations.

"Hollow fiber" means in extremely small tube or fiber having an internal diameter or bore size of from 20 to 1,000 μm (0.020 to 1 mm).

"Membrane" means a material which will selectively exchange ions or permeate a reagent while rejecting or retaining a detectably useful amount of sample of interest.

"Regenerant" or "Regenerant Solution" means ions which are of a kind useful for regenerating an ion-exchange membrane so that said membrane can chemically convert electrolyte eluant into deionized water or to another less ionized or weakly ionized form in order to sensitively detect a sample of interest.

"Reagent" means a chemical species or combination of species which are of a kind that, when introduced through a membrane into chromatographic analytical column effluent, react chemically, directly or indirectly, with a sample species of interest or an interfering sample species less than perfectly resolved with respect to a sample species of interest, for the purpose of enhancement of the sensitivity of detection of said species of interest, or a monitored proportional derivative thereof.

"Packing means" refers most specifically to particles arranged in an array or manner which is liquid porous. In its broadest sense it is meant to include equivalents such as a small chain or configured wire on a sintered or open cellular matrix element added to the interior or bore of a hollow fiber or tube or channel for the purpose of duplicating the mixing effect of a particle matrix therein according to the invention, and which otherwise is nondetrimental to the purposes of the invention.

"Reactor" means a liquid chromatographic device for post-column reactions by reagent addition, and is additionally meant to include, generically, post-column suppressor devices for performing the suppression reaction in Ion Chromatography.

"Flow-through Channel" means a single or multiple channels such as may be formed, for example, by connecting a plurality of tubular or hollow fiber membranes in parallel.

"Selectively exposed" refers to a membrane in which one surface or surface portion thereof is exposed to a flow-through channel for contact with chromatographic effluent, and its opposite surface or surface portion is isolated from the channel and effluent by the wall thickness of the membrane.

The invention relates to a liquid chromatographic reactor in which there is included a flow-through channel comprising a membrane, the membrane having an effective surface portion thereof selectively exposed in the channel for the purpose of an ion exchange suppression reaction with the effluent, or for the purpose of permeating reagent through the membrane into the channel for admixing with the effluent, said flow-through channel being adapted for passing through liquid chromatographic effluent to a detector,

3

characterized in that a packing means which is effective for reducing band spreading of eluted sample bands in said liquid effluent is disposed in the flow-through channel.

A further aspect of the invention relates to a method of liquid chromatographic analysis wherein a sample is added to an analytical column and is displaced by a liquid eluent, and the effluent from the analytical column with sample bands chromatographically resolved or partly resolved is passed to a detector through a reactor which includes a flow-through channel, comprising a membrane having a surface portion which is selectively exposed in the flow-through channel for exchanging ions with the effluent for the purpose of the suppression reaction, or for permeating reagent through the membrane for admixing with the effluent for the purpose of the reagent addition reaction and whereby within the channel a supression reaction or a reagent addition reaction is promoted to enhance the detection sensitivity of a sample band(s) of interest, characterized in that the flow-through channel which receives the effluent and conducts the effluent to the detector contains a packing means to reduce sample band spreading.

In respect to further details of the invention, the most preferred form of apparatus for suppression and reagent addition purposes both is a small tube or hollow fiber membrane of about 500 to 2000 μm I.D., and most preferably about 600 to 1000 μm I.D., the bore of which is filled with a packing.

Liquid effluent of an analytical column is eluted into the bore of the packed tube membrane, wherein the effluent can enter into a suppression reaction at the inside surface of the tube, or be applied for the purpose of permeating a reagent through the wall of the tube to be physically admixed with the analytical column effluent.

The preferred membrane size range produces, in combination with proper particle sizes, low band spreading at acceptably low back pressures. While much larger tube membranes can also be designed to effectively produce very low band spreading, nondetrimental to high performance analytical columns, this is achieved typically at higher incurred levels of back pressure which may undesirably require a reinforcing jacket or other suitable reinforcement of the membrane.

Membranes useful for the suppression reaction are generally described as charged membranes which are molecularly porous. Ions of the opposite charge as the membrane tend to permeate selectively through the membrane whereas those of the same charge are rejected. These membranes are typically prepared by sulfonation (negatively charged membrane); or by amination (positively charged membrane) of various synthetic polymers, e.g., of ethylene. Particularly useful are sulfonated polyfluorocarbon membranes which are preferred because of their excellent solvent resistance and ready commercial availability in useful sizes (sold under the trademark Nafion®).

The term "suppression" or "suppressor" reaction, as used above, is intended to refer specifically to reactions distinctive to Ion Chromatography in which electrolyte eluent is converted to a weakly ionized form for the purpose of sensitively detecting sample ions in a weakly conductive background. Specific examples of common forms of useful suppressor reactions are given in Table I, below, wherein $R^-$ denotes the use of a negatively charged form of membrane; and $R^+$ a positively charged membrane.

TABLE I

| Eluent | Eluent ion | Regenerant ion | Products of suppressor reaction |
|---|---|---|---|
| Anion analysis NaOH | $OH^-$ | $R^-H^+$ | $_-R^-Na^++H_2O$ |
| Na Phenate | $\phi O^-$ | $R^-H^+$ | $R^-Na^++\phi OH$ |
| $Na_2CO_3/NaHCO_3$ | $CO_3^{2-}/HCO_3^-$ | $R^-H^+$ | $R^-Na^++H_2CO_3$ |
| diNa-Glutamate | Glut. $^{2-}$ | $R^-H^+$ | $R^-Na^++R^-Glut.H^+$ |
| Cation analysis HCl | $H^+$ | $R^+OH^-$ | $R^+Cl^-+H_2O$ |
| $AgNO_3$ | $Ag^+$ | $R^+Cl^-$ | $R^+NO_3^-+AgCl\downarrow$ |
| $CU(NO_3)_2$ | $Cu^{2+}$ | $RNH_2$ | $RNH_2 \cdot Cu(NO_3)_2$ |
| Pyridine ° HCl | $PyH^+$ | $R^+OH^-$ | $R^+Cl^-+Py+H_2O$ |
| Aniline ° HCl | $\phi NH_3^+$ | $R^+OH^-$ | $R^+Cl^-+\phi NH_2+H_2O$ |
| p-PDA ° 2HCl | $p-PDAH_2^{2+}$ | $R^+OH^-$ | $R^+Cl^-+p-PDA+H_2O$ |

The charged membrane as used in the suppressor reaction is contacted on its surface remote from the analytical column effluent with a solution or slurry containing the ion form ($H^+$, $OH^-$, $Cl^-$, etc.) in order to continuously regenerate the membrane. Preferably, fresh regenerant solution is continuously supplied to this surface of the membrane at concentrations insufficient for breakthrough of the regenerant into the effluent, and sufficiently concentrated to completely neutralize or suppress the eluent. A regenerant may also be advantageously employed in the form of exchangeable ions ($H^+$, $OH^-$, $Cl^-$, etc.) attached to an ion exchange polymeric backbone. For example, acid or base form ion exchange resins, and particularly resins which are partially or completely dissolved in water, or an aqueous slurry may be used.

In respect to adding reagent to analytical column effluent, diverse known types of membranes (tubes or films) may be usefully employed to permeate selective chemically active species of the reagent. Particularly useful are porous cellulosic material membranes prepared such as by the method of U.S. Patent 3,546,209. The permeation characteristics of cellulose membranes are generally that of size selection, and accordingly, these may be broadly applied to permeate widely diverse reagent species. Synthetic polymeric membranes, such as produced typically from polyolefins and also silicone rubber, as well as a large group of other polymeric materials, may be additionally adapted for purposes of reagent addition. The latter membranes may be either charged or non-charged in type. For example, the charged membranes described for Ion Chromatography, supra, are useful for reagent addition, a specific embodiment thereof being described in Example 6, below. Membranes suitable for reagent addition are also described in U.S. Patent Nos. 3,864,087; 4,025,308 and 4,131,428, which are referenced for further exemplary teachings useful in the selection of known selectively permeable membrane materials which may be fabricated into packed membrane structures for the applications intended by the invention.

The reaction kinetics of reagent addition methods, as well as prior developed reagents, are considered well known background technology to the invention and useful in its practice. For examplary purposes only, specific examples of some of the important reagent reactions useful in liquid chromatography, and specifically selected membranes for permeating these reagents are described by J. C. Davis, (EP Application 81902122.1).

The importance of the packing means is generally viewed differently with respect to the suppression reaction than in typical reagent addition methods. This is because in the suppression reaction, the high utility achieved is based on a combination of most importantly (1) radial transport (mixing) of the ionic solute to the membrane and thus greatly enhanced ion exchange efficiency allowing the use, e.g., of very short flow channels; and (2) closer duplication of small channel flow in large packed channels which effectively reduces band spreading in a manner which may be compared to using a series of very small channels (rather than a single large diameter channel) to reduce laminar flow forms of band spreading. Generally, it is frequently only the latter effect (2) which is predominantly important in reagent addition, thus permitting the use of much larger tube membranes (of other suitable flow channels) than previously considered feasible.

There are few technical reasons to use packings other than particles since these work satisfactorily and are amendable to simple fabrication procedures. However, the mixing effect (1) and small channelling effect (2) which reduces laminar form band spreading obviously may be duplicated by nonparticulate inserts. Somewhat practical forms of the latter packings would include sintered or open cellular structures which would not detrimentally produce dead flow spaces which would cause tailing. A small chain or an undulating wire or foil would similarly produce mixing and occupy part of the core of the channel in such a manner to effectively reduce laminar flow band spreading effects.

Further objectives, aspects and advantages of the invention will be apparent from the following more detailed description of the invention considered together with the accompanying drawings, in which:

Fig. 1 is an elevational view of an apparatus for performing liquid chromatography and which is constructed to employ the principles of the invention;

Fig. 2 is a cross-sectional view of the reactor device of the Fig. 1 apparatus;

Fig. 3 is an enlarged cross-sectional view of a single tube membrane, such as may be used in the Fig. 2 device, and graphically illustrates the permselective ion transfer properties of the packed tube membrane which is relevant particularly to the Ion Chromatography suppressor reaction or a form thereof;

Fig. 4 is a graph which illustrates in respect to variables of tube membrane size, and packed particle size and type, approximate expected band spreading and back pressure values which would result at conventional liquid chromatographic use conditions; and

Figs. 5—7 are reproductions of chromatograms developed using the improved apparatus and method of the invention and using comparative prior art, and are associated with Example 2, below.

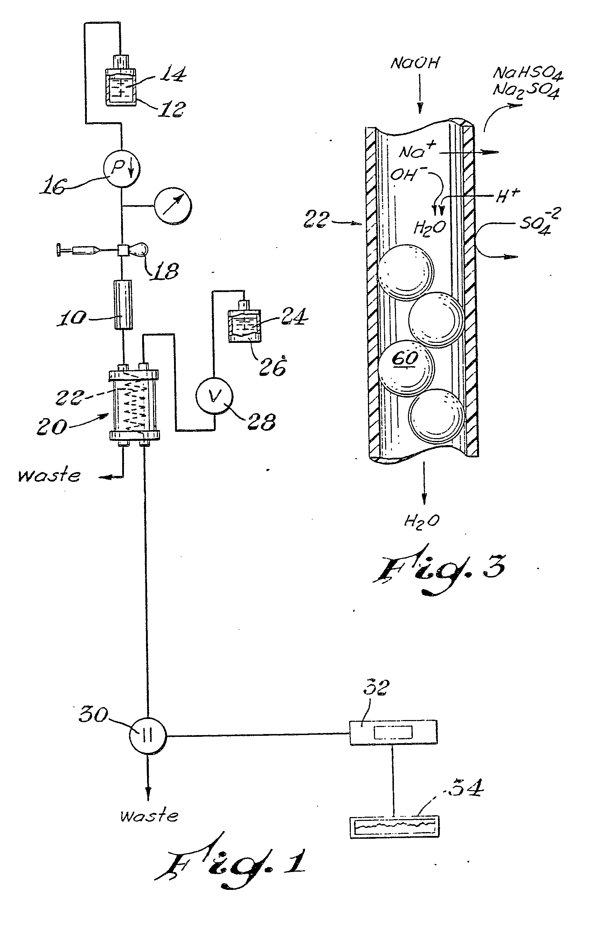

Referring to Fig. 1, there is shown a schematic view of liquid chromatographic apparatus which comprises a chromatographic or analytical column 10. The analytical column comprises a housed chromatographic separating means typically in the form of a particulate packing or gel through which a sample is eluted to separate the sample into component species. Diverse types of separating means may be used to construct a suitable analytical column, as described extensively, e.g., by Snyder et al. In respect to Ion Chromatography analysis, the analytical columns described in U.S. Patent No. 3,966,596 and the high performance columns described by Stevens et al., European Patent Application No. 82100848.9, filed February 5, 1982, would be preferentially selected.

Preferred means to add eluent or mobile phase to analytical column 10 comprises an eluent reservoir 12 containing eluent solution 14, the latter of which is withdrawn from the reservoir by a chromatographic pump 16 equipped with an optional pulse damping coil (not shown).

Preferred means for adding a sample comprise, e.g., a syringe loadable sample injection valve 18. Sample added to the system at valve 18 is swept through the apparatus by the pumped eluent solution to chromatographic column 10. The sample elutes in the effluent of column 10, with component species thereof appearing chromatographically displaced in a background of the eluent or mobile phase.

A reactor/suppressor device 20 includes a coiled packed membrane tube 22, into the bore of which the column 10 effluent is fed. The opposite outer surface of the packed membrane tube is immersed in a stream of flowable regenerant/reagent 24 which is preferentially flowed counter to the flow of the effluent. The regenerant/reagent solution is supplied preferentially by gravity feed from a reservoir 26 through a flow control valve 28, and ultimately from device 20 to waste. The effluent stream emerges from the bore of the packed tube membrane chemically modified by the regenerant/reagent solution, and is ultimately fed in a continuous stream to a liquid chromatographic detector 30.

In the detector, the effluent produces an electrical signal proportional to the property monitored such as conductivity, light absorbance, fluorescence, etc., and which is directed from the detector ultimately to a suitable visual recorder 32, and simultaneously a chromatogram is produced using typically a strip chart recorder 34. An ion detector which is preferentially, a conductivity detector is used when the invention is to be applied to Ion Chromatography analysis.

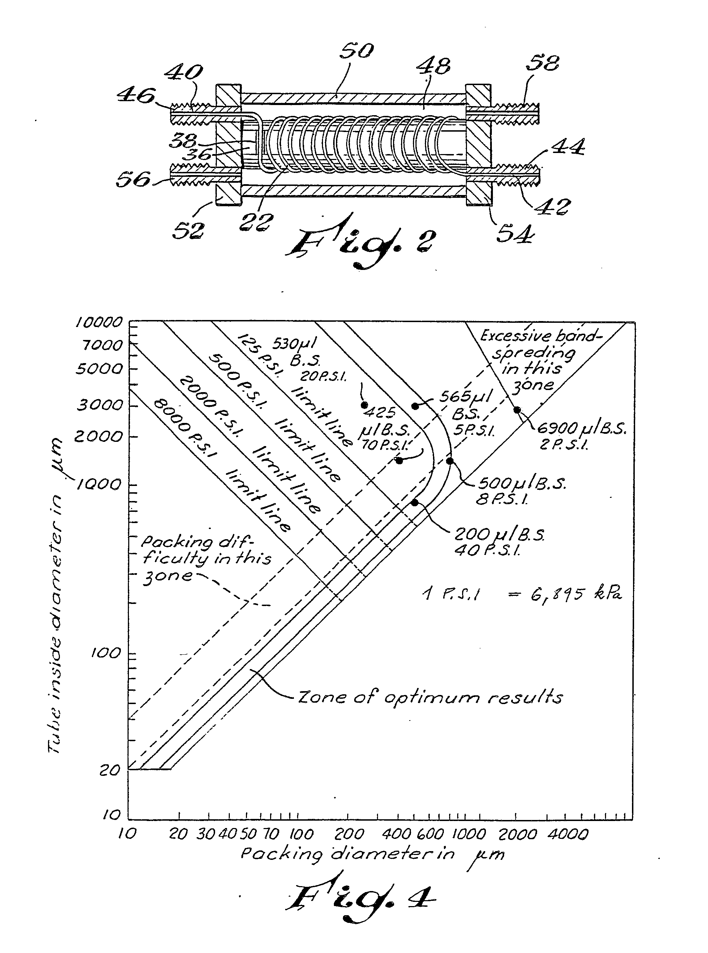

Referring to Fig. 2, a preferred construction of the reactor/suppressor device is illustrated. The packed membrane tube 22, in this embodiment, is coiled about a supporting cylinder or mandrel 36 which is slotted as shown at 38. A short section of the membrane tube is pressed into the slot 38 and conformed to a flattened or oval shape in order to form a bed support for the packing means, preferentially a particulate packing or particles 60 (shown in Fig. 3) to prevent them from dislodging or shifting position inside the tube. A simple tube clip could be substituted equivalently for slot 38 in these embodiments. The end portions 40, 42 of the packed membrane tube are inserted "dry" inside the bore of threaded eluent inlet and outlet ports 44, 46, respectively, and sealed by swelling the tube with water, or by use of suitable adhesive coatings. The tube membrane in this arrangement is preferentially packed with particles 60 from the region of effluent inlet port 44, forwardly to slot 38, the tube being unpacked with essentially little or no detrimental effect in the short section of the tube membrane which is forward of the slot.

An annular regenerant/reagent space 48 is defined immediately about mandrel 36 and is formed by a cylinder 50 which is arranged coaxially about the mandrel. End caps 52, 54 are joined to the contiguous ends respectfully of cylinder 50 and mandrel 36 which defines the thus enclosed regenerant/reagent space which communicates with reservoir 26 through a regenerant/reagent inlet port 56; and a waste collecting vessel (not shown) through regenerant/reagent outlet port 58.

Fig. 3 is a graphic illustration of the workings of the packed membrane tube as it can be beneficially applied as an improved suppressor device in an Ion Chromatography instrument. Dilute regenerant e.g., $H_2SO_4$ in water, is in contact with the outer wall of the packed membrane tube; and effluent composed, for example, of NaOH eluent and sample are fed into the bore of the membrane tube. As the effluent flows through the bore of the membrane tube, it encounters active ion exchange sites on the inside surface of the tube (and/or on particles 60 as defined below). Causing the $Na^+$ effluent ions to exchange with $H^+$ ions of the tube membrane, forming the product deionized water, in which the sample ions can be sensitively detected. The exchanged $Na^+$ ions are permeated ultimately through the wall of the tube membrane into the regenerant solution and swept away to waste; whereas, due to Donnon exclusion the counter $OH^-$ ions are rejected by the membrane. The $OH^-$ ions thus tend to remain in the effluent to form water with hydrogen ions of the regenerant which continuously recharge the active sites of the tube membrane. Similar suppression reactions can be envisioned with positively charged or aminated packed tube membranes to neutralize or suppress, e.g., HCl eluent ions with a $OH^-$ ion form regenerant. Essentially all the suppression reactions can thus be performed by devices using suitably one or the other of the above types of negatively or positively charged packed tube membrane structures.

Reagent addition methods differ from suppressor reactions in that the latter contemplate a balanced neutralizing of the effluent, while frequently excess reagent may be added to the effluent without detrimentally affecting the sensitivity of detection. This generally sets limits on the concentration of the regenerant at levels below that which would cause breakthrough of regenerant into the effluent and thus less sensitive detection. Immobile regenerant, such as attached to large polymeric molecules (for example, dissolved ion-exchange resin, or a slurry of ion exchange particles) can be used at increased regenerant concentration levels, however, since the large polymeric molecules would be non-permeable through the membrane wall.

In cases where regenerant or reagent concentration can be made suitably high either because of the impossibility of membrane breakthrough or because an excess can be tolerated, large static or non-replenished reservoirs can be used in place of the illustrated device 20 using continuously fresh counter flowing regenerant or reagent solution.

When permitted, a static reservoir can thus be used wherein simply the packed tube membrane is immersed in a non-replenished solution of concentrated regenerant/reagent which is preferably stirred to avoid a concentration differential from occurring and which would be replaced with fresh solution periodically. While the rejection properties of a membrane are not perfect, leaking effluent nevertheless would tend to produce only a very dilute amount of contaminant in a large concentrated reservoir of regenerant or reagent. Assuming that the contaminant is a possible interfering species, the effect, at most, may show only as a slightly varying baseline over a period of use. A suitable application for a static reservoir design is described particularly with respect to the teaching of Example 6.

The bore size of the tube membranes useful in the practice of the invention are from 20 to 10,000 μm I.D. Generally, similar dimensions apply for flat membrane structures, using the figure 10,000 μm I.D. to refer to the cross-sectional dimensions of the channels used in these devices as the outer broad limit of the invention. The void volume of such channels or bores is desirably less than about 20 ml.

The minimum dimension of 20 μm is approximately the current manufacturing limit of the art for hollow fiber manufacturing methods. The smallest size tube that can be used in this invention is determined essentially by the back pressure the tube can accept without being detrimentally affected. Since this is a function of liquid flow rate, extremely small tube membranes would be contemplated for use, e.g., in microbore chromatography described by Scott et al., J. of Chrom., Vol. 169, p. 51 (1979). In addition, since the invention can be practiced using several membrane tubes arranged in parallel, multiple small tubes can be used in these embodiments to overcome their back pressure limitations, as might preclude their use, for example, as a single tube membrane, as illustrated as the preferred embodiment.

The upper size limit of 10,000 μm I.D. is arbitrarily set on the basis that a tube of too large an I.D. would incur the penalty of too much hold up volume and thus unnecessarily extend the time required for analysis.

The size of the packing particles also significantly affects back pressure values, and the amount of band spreading a given sized packed tube membrane will produce. Generally, the very large particles 60, and those which are very small, in relation to the bore size of the tube will produce the highest amounts of back pressure. An optimum size thus exists between these levels which can be caused to maintain the back pressure acceptably low.

Band spreading, on the other hand, is generally invariably improved as the size of the particles is reduced in relation to the size of the tube. However, the improvement tends to become progressively less significant as the size of the particle is reduced. Thus, very definite optimum size levels may be selected in the intermediate size ranges, relating to bore size, where further gains in reducing size have little meaningful benefit in further reducing band spreading; and wherein the increased back pressure imposed by the addition of the packing means is within a very acceptable range. These optimum intermediate ranges of particle size where both desired minimal band broadening and acceptably low back pressure increase are realized is quite different depending on the specific size of the tube membrane or channel cross sectional area, as applies. Generally, the "intermediate" size range stated in relative terms to bore size (i.e., as a fraction thereof), narrows and tends to require the selection of smaller particles, relative to bore size, as the bore size is increased.

This phenomena is illustrated by the graph of Fig. 4. This graph should not be taken as applying in the absolute sense, since it assumes a given flow rate and membrane length. Particularly, the back pressure values shown in the graph would be shifted significantly at other than the shown flow rate.

The plotted data points on this graph are taken from Example 1. From this plotted data, projections are made based on the assumption that a decrease in packing size by 4 times should reduce band spreading by two-fold, while incurring a 16-fold increase in back pressure, all other factors remaining constant. Hence, in moving diagonally toward the left corner of the graph, band spreading is generally improved, but at fast increasing rates of back pressure. At the value of about 200 μl band spreading, the effects are generally nondetrimental, and, hence, there is often little reason to pursue greater improvement. It is noted, nevertheless, that 200 μl is by no means the lower limit of achievable band spreading reduction, as this graph obviously would imply. It is also shown that for tube membranes in the most preferred size range of from 600 to 1000 μm bore diameter, an optimum choice of particles are those between 0.6 to 0.8 as large as the bore diameter.

Example 1

Suppressor devices are constructed for comparative testing using as the ion exchange membrane, commercial Mafion® tube membranes available commercially from the DuPont Company; and as the packing, generally spherical, inert beads of styrene-divinylbenzene copolymer. Bead size is carefully controlled using sieves, and by cropping only those beads which firmly lodge in the sieve openings. Microscopic examination shows the beads to have the same diameter ±5%. The beads are packed in preassembled or partly assembled suppressor devices by vacuum drawing or injecting into the eluant inlet port, a dilute slurry of the packing in deionized water containing a small amount of non-ionic surfactant (suitably 1% Brij 35). To evaluate relative band spreading performance, the devices are used with a Dionex Model 10 ion chromatograph with the analytical column removed; and the effluent inlet port of the suppressor device connected directly to the sample injection valve. Band spreading is determined, using chromatographic conditions of:

| | |
|---|---|
| Eluent: | 0.0024 $M$ Na$_2$CO$_3$/0.003 $M$ NaHCO$_3$ in deionized water at 160 ml/hour |
| Regenerant: | 0.02 $N$ H$_2$SO$_4$ at 160 ml/hour |
| Sample: | 50 μl of a solution of deionized water made up to contain in parts per million (ppm); 0.8 F$^-$, 1.0 Cl$^-$, 5.0 NO$_2^-$, 14 PO$_4^{-3}$, 2.5 Br$^-$, 8.5 NO$_3^-$, and 12.5 SO$_4$. |
| Detector Sensitivity: | 120 μS/cm full scale. |

7

Band spreading is computed by injecting the sample standard and measuring the triangulated peak baseline width in µl. The sample injection volume (50 µl) is then subtracted to produce a measured value of band spreading also in µl. The data generated are shown in Table II.

TABLE II

Characteristics of Packed and unpacked tube suppressors capable of suppressing a maximum eluent flow of 160 ml/hour

| Device No. | Fiber internal diameter in µm and (mm) | | Tube length needed in feet (meters) | | Packing diameter in µm | Band spreading in µl | Pressure drop in kPa (PSI) for flow rate of 160 ml/h | |
|---|---|---|---|---|---|---|---|---|
| 1[g] | 400[a] | (0.4) | 6[b] | (1.83) | None | 850 | ∿14 | (∿2) |
| 2[g] | 800[c] | | 20 | (6.1) | None | 870 | 41 | (6) |
| 3[g] | 800[c] | | 5 | (1.5) | 500 | 200 | 286 | (40) |
| 4[g] | 1,400[d] | | 20 | (6.1) | None | 5,000 | <7 | (<1) |
| 5 | 1,400[d] | | 5 | (1.5) | 850 | 500 | 55 | (8) |
| 6 | 1,400[d] | | 5 | (1.5) | 425 | 400 | 483 | (70) |
| 7[g] | 3,100[e] | | 20 | (6.1) | None | 33,000 | <7 | (<1) |
| 8 | 3,100[e] | | 8 | (2.44) | 2,000[f] | 6,900 | ∿14 | (∿2) |
| 9 | 3,100[e] | | 3 | (0.91) | 500 | 565 | 34 | (5) |
| 10 | 3,000[3] | | 3 | (0.91) | 250 | 530 | 138 | (20) |

[a] Sulfonated polyethylene tube of Stevens et al. (EP Publication Patent No. 32770).
[b] A bundle of 14 tubes each 6 feet (2.1 meters) long.
[c] Nafion® 811-X
[d] Nafion® 815-X
[e] Nafion® 810-X
[f] 2 mm stainless steel ball bearings
[g] Comparative example.

The data of Table II indicate that the use of the packing results in much less membrane needed and much less band spreading. The improvements are greatest for the largest I.D. tubes used, Nafion 810-X. All of the packed devices, with the exception of Device No. 8, show less observed band spreading than the use of unpacked 400 µm I.D., and 800 µm I.D. tubes. The band spreading value for Device No. 8 is considered to define the limit of marginally utility of devices constructed according to the invention, this data being plotted in Fig. 4 and appearing at about the limiting line drawn to define non-utility because of excessive band spreading.

Example 2

The purpose of this example is to compare, under the same chromatographic conditions, the resolution efficiency of a Dionex Model 10 Ion Chromatograph instrument, which is equipped with a high performance analytical column and which is modified to use in these successive experiments; (a) a conventional ion-exchange resin bed suppressor column, 2.8×500 mm in size filled with Dowex 50W×16 ion exchange resin in the hydrogen ion form, (b) an optimum form of unpacked tube membrane suppressor, being Device No. 2 of Table II, and (c) a packed tube membrane suppressor being Device No. 3 of Table II. The eluent and regenerant compositions and sample standard are the same as in Example 1. In each experiment, the same high performance analytical column is used and the same detector sensitivity is used, being 7.5 µS per cm full chart deflection.

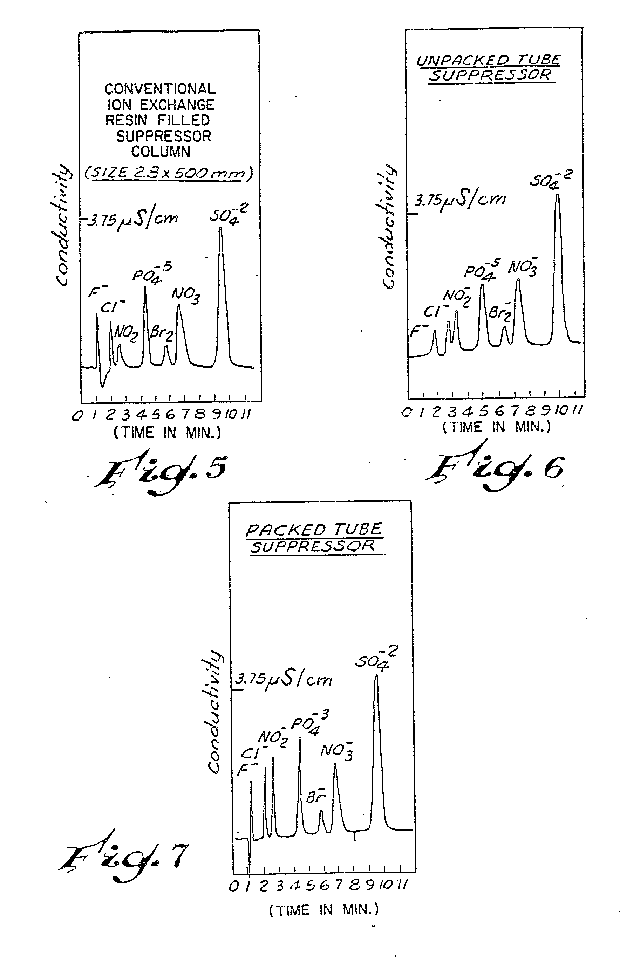

Fig. 5 is a reproduction of the chromatogram obtained when the conventional suppressor column is used. Fig. 7 is a reproduction of the chromatogram obtained when the packed tube membrane suppressor of the present invention is used. Note the improved resolution of the peaks in Fig. 7 especially the resolution of $Cl^-$ and $NO_2^-$ and of $Br^-$ and $NO_3^-$ vs. the peaks in Fig. 5. The $NO_2^-$ peak is taller in Fig. 7 because band spreading is less with the present invention and because $NO_2^-$ partially reacts with the ion-exchange resin in the conventional suppressor column, removing it from the eluent stream so that less

$NO_2^-$ ion passes to the detector. Fig. 6 is a reproduction of the chromatogram obtained when the unpacked tube membrane suppressor is used. Comparing Fig. 6 with Fig. 7, note again the superior resolution efficiency of the present invention due to the reduced band spreading. This superiority is evidenced by sharper peaks and better resolution especially of $Cl^-$ and $NO_2^-$ and of $Br^-$ and $NO_3^-$. Also, the peaks are taller in Fig. 7 resulting in superior detection sensitivity.

Example 3

The purpose of this example is to demonstrate a packed tube membrane suppressor for cation analysis using Ion Chromatography. The device is constructed using as the membrane, a tube membrane of aminated Microline® (Product Code 1850, Thermoplastics Scientific, Inc.), aminated by the RAI Research Corp. according to the procedure outlined by V. D'Agostino et al., *Proceedings of the Electrochemical Society*, Vol. 81—2 (1981). The tube is packed with 500 µm styrene-divinylbenzene copolymer beads according to the procedure of Example 1. Dow Corning Room Temperature Vulcanizing Silicone Rubber Bath Tub Caulk is used to seal the tubing ends in the eluent inlet and outlet ports. The device is used with a Dionex Model 10 Ion Chromatograph instrument equipped with a 9×100 mm cation separation analytical column filled with 50 µm surface sulfonated styrene-divinylbenzene copolymer prepared according to U.S. Patent No. 3,966,596. The eluent is 0.01 *M* HCl at a flow rate of 160 ml per hour. The suppressor device is regenerated with 0.02 *M* NaOH at a flow rate of 160 ml per hour. The detector sensitivity is set at 30 µS per cm full chart deflection. The recorder baseline is smooth and flat at the low conductivity value of about 16 µS per cm indicating an efficient suppression of the much higher conductivity of the eluent. 50 µl of a solution containing 100 ppm $Na^+$ and 170 ppm $K^+$ is injected. The recorder shows a normal Gaussian peak for $Na^+$ at 4.5 minutes being about 29 µS per cm tall and a normal Gaussian peak for $K^+$ at 7.5 minutes being about 18 µS per cm tall. At 10 minute intervals, 5 serial dilutions of the sample standard are injected with the final dilution containing 2.5 ppm $Na^+$ resulting in a peak 0.63 µS per cm tall; and containing 4.25 ppm $K^+$ resulting in a peak 0.31 µS per cm tall. A plot of concentration of $Na^+$ and $K^+$ vs. peak height produces a smooth curve that is nearly linear. The band spreading of the device is determined to be 200 µl. This example clearly demonstrates the utility of a packed tube membrane suppressor for cation analysis by Ion Chromatography. Conventional ion-exchange resin filled suppressor columns result in more band spreading (usually about 500 µl) and since they exhaust in use, must be periodically regenerated. Regenerating a suppressor column for cation analysis by Ion Chromatography is much more difficult than regenerating one for anion analysis because the regenerated suppressor for cation analysis requires extensive rinsing with water to obtain a smooth and steady baseline, often taking several hours to as much as a day. All of the above problems with the conventional ion-exchange resin filled suppressor column are greatly minimized by the use of the present invention.

Example 4

The purpose of this example is to compare, under the same chromatographic conditions, the effect of placing sulfonated packing into a cation-exchange tube membrane suppressor. Four devices are constructed, each containing a tube of Nafion® 811-x 0.76 m (2.5 feet) long, and using as the packing: (A) unsulfonated 500 µm styrene-divinylbenzene copolymer beads; (B) surface sulfonated 500 µm styrene-divinylbenzene copolymer beads having a carbon exchange capacity of 0.01 Meq per gram; (C) surface sulfonated 500 µm styrene-divinylbenzene copolymer beads having a capacity of 0.8 Meq per gram (both of the above surface sulfonations are performed according to U.S. Patent No. 3,966,596); and (D) 500—580 µm Dowex® 50W×4 Ion Exchange Resin having a cation exchange capacity of about 5.2 Meq per gram. Device A suppresses a maximum eluent flow rate of 80 ml per hour; Devices (B) and (D) a maximum eluent flow rate of 112 ml per hour; and Device (C), a maximum eluent flow rate of 138 ml per hour. The band spreading of Devices (A), (B) and (D) is 170 µl; and that of Device (C) is 230 µl. When examined under a microscope, the packing of Device (A), (B) and (D) appeared to be smooth spheres, while the packing of Device (C) appeared to be spherical but rough not unlike a ball of twine. All of the sulfonated packings increased the maximum eluent flow rate that could be suppressed. The use of the roughly surfaced packing of Device (C) increased the maximum eluent flow rate but also increased band spreading to an extent that its overall performance is judged to be inferior. No significant difference in performance is seen between the 0.01 Meq per gram packing and the 5.2 Meq per gram packing. This example illustrates that for packed cation exchange tube membrane suppressors, best overall performance is seen when the packing is sulfonated and its surface remains smooth and spherical.

Example 5

The purpose of this example is to compare packed and unpacked flat membrane suppressors. An Amicon CEC-1 Post Column Concentrator, modified for counter-current flow of regenerant, is used as a flat membrane form suppressor and is fitted with a sheet of Nafion® 117 ion exchange membrane film. The eluent is directed through the spiral channel of the upper plate being 280 µm deep, 3200 µm wide and 1.2 m (4 feet) long. The unpacked device suppresses a maximum eluent flow rate of 16 ml per hour and shows a band spreading value of 675 ml packed form, using 250 µm styrene-divinylbenzene beads, the device suppresses a maximum eluent flow rate of 48 ml per hour and has a lesser band spreading value of 300 µl.

Thus, the packing of the eluent channel of a flat membrane suppressor significantly reduces band spreading and at the same time greatly increases the maximum eluent flow rate.

Example 6

The purpose of this example is to demonstrate the utility of the present invention for the important application of post column derivatization. The device is six inches of Nafion® 810-X ion exchange tubing having an internal diameter of about 3100 μm containing a packing of 30—40 U.S. Mesh size (0.4—0.6 mm) glass beads. The application and experimental conditions are the same as in J. C. Davis, EP Patent Application No. 81902122.1, Example 2, except that the device of the present invention is used. A comparison of chromatograms generated with the present invention and generated with the invention of the above cited EP Patent Application shows only minor differences with slightly taller peaks observed with the use of the present invention.

The important advantage of the present invention vs. the above cited EP patent application is that much larger tubes can be used with the present invention. The above cited EP patent application is limited to "hollow fibers", i.e., limited to internal tube diameters of a maximum size of 1,000 μm because excessive band spreading is observed with the use of tube diameters greater than 1,000 μm. The present invention solves this problem and allows the use of tubes of an internal diameter larger than 1,000 μm because band spreading is not excessive and indeed is less with the present invention. The use of the larger tubes possible with the present invention is an advantage when (a) only larger tubes are available, (b) because larger tubes are often easier to connect into the system and (c) because larger tubes are often physically stronger and thus considerably more durable.

The transport of solutes across a membrane is usually composed of three steps: (1) convective transport in the bulk solution on one side of the membrane caused by stirring, (2) boundary layer diffusion across the effectively stagnant film of liquid next to the membrane, and finally, (3) diffusion through the membrane itself. Convective transport in stirred solution is much more rapid than diffusion transport in stagnant solution. Accurate measurement of resistance to transport of a membrane requires rapid mixing of the bulk solution to minimize the boundary layer effect.

In an ideal tube under laminar flow conditions, there is no mixing or convective radial transport of solutes, only the much slower diffusion process. Thus, many applications of hollow fiber membranes are limited not by membrane transport performance but by diffusion in the bulk solution to the membrane. In such cases, improvements in membrane performance, such as by using a thinner active membrane, would have little or no effect.

One means of creating convective radial transport is to pack the bore of a hollow fiber with beads in the manner hereinabove described. This approach results in a substantial increase in mass transport (1).

Alternative approaches which may be used to create mixing near the membrane include waving and pinching of the hollow fibers, placing a wire inside of the hollow fiber, using a hollow fixer in an ultrasonic field, and packing of both the bore and the outside of the hollow fiber.

Example 7

A hollow fiber made from DuPont Nafion® 811-X, having a wet I.D. of about 800 μm and an O.D. of about 1000 μm was used. Nafion is a perfluorosulfonic acid polymer cation exchanger having a capacity of about 1 meg/g.

The Nafion 811-X was assembled into a hollow fiber suppressor for ion chromatography (1) and tested for its ability to convert an eluent stream containing 0.0024 $M$ sodium carbonate and 0.003 $M$ sodium bicarbionate in water into carbonic acid in water by flowing 0.02 $N$ sulfuric acid around the outside of the fiber at 1.5 times the flow rate of the eluent.

The effluent of the hollow fiber device was directed to a conductivity detector/strip chart recorder set for a full scale response of 120 μS cm$^{-1}$. The criteria for maximum eluent flow rate with each device tested was a minimum conductivity response vs. flow rate. Higher flow rates than "maximum" resulted in a higher conductivity measurement due to incomplete conversion of $Na_2CO_3$/$NaHCO_3$ to $H_2CO_3$. Lower flow rates than maximum resulted in a slightly higher conductivity measurement due to leakage of regenerant $H_2SO_4$ across the membrane into the eluent stream.

Band spreading was determined by injecting 50 μl of a solution of inorganic salts (as described in Stevens, T., Jewett, G. and Bredeweg, R., ML-AL 81-00457, 3/31/81, "Packed Hollow Fiber Strippers for Ion Chromatography") into the hollow fiber device which resulted in an on scale peak on the strip chart recorder set for a full scale response of 120 μS cm$^{-1}$. This peak was then triangulated and the peak width at baseline band spreading of the tubing used between the injection valve and detector, 70 μl, were then subtracted from the triangulated peak width so obtain the band spreading value reported.

In one experiment, the hollow fiber was waved back and forth through a ridge of wax (not shown) deposited in a spiral manner on the rod of the hollow fiber suppressor, Figure 2. As such, the fiber was both waved about every inch and also pinched about every inch since the fiber was forced into a 0.5 mm (0.02 inch) wide slot cut into the wax ridge.

In another experiment, a 575 μm diameter NiChrome wire was inserted into the hollow fiber. In addition, the hollow fiber/wire combination was also used in a wave form by bending the wire back and forth with a bend about every 32 mm (1.25 inches).

**0 075 371**

In other experiments, the hollow fixer suppressor, containing an unpacked fiber and a fiber packed with 500 μm styrene-divinylbenzene copolymer beads, was immersed into an ultrasonic bath and tested.

One device tested was constructed by placing the Nafion® 811-X hollow fiber inside a 3.2 mm (0.125 inch) O.D., 2.4 mm (0.095 inch) I.D. Teflon® tube having tees at each end to separate the tube and shell sides of the membrane as described in reference 2. The space between the outside of the hollow fiber and the inside of the Teflon tube was packed with 250 μm diameter styrene divinylbenzene copolymer beads. Packings between the outside of hollow fibers and a surrounding pressure resistant housing are described in U.S. Patent No. 3,503,515 to V. J. Tomsic, issued March 31, 1970. This device is used as a permeation separator apparatus for desalination of brackish or sea water and the packing is used only for the purpose of preventing channelling of the incoming saline solution and then to ensure proper fluid flow.

Table III shows comparative data for various hollow fiber devices tested.

### TABLE III

| Device No. | Device description | Maximum eluent flow rate | Band spreading value |
|---|---|---|---|
| 1 | 6 meter (20 feet) of Nafion® with no packing and no modification | 138 ml/hour | 800 μl |
| 2 | 1.2 meter (4 feet) of Nafion® 811-X containing a 575 μm diameter wire | 40 ml/hour | 110 μl |
| 3 | 1.2 meter (4 feet) of Nafion® 811-X containing a 575μm diameter wire, waved | 48 ml/hour | 150 μl |
| 4 | 0.9 meter (3 feet) of Nafion® 811-X, waved and pinched | 20 ml/hour | 140 μl |
| 5 | 1.5 meter (5 feet) of Nafion® 811-X with no packing and no modification | 32 ml/hour | 240 μl |
| 6 | 1.5 meter (5 feet) of Nafion® 811-X with no packing and no modification immersed into a Bronson B-12 ultrasonic bath (moderate field strength) | 48 ml/hour | 280 μl |
| 7 | 1.5 meter (5 feet) of Nafion® 811-X with no packing and no modification immersed into a Bandeline Sonovex RK-106 ultrasonic bath (high field strength) | 64 ml/hour | 460 μl |
| 8 | 1.5 meter (5 feet) of Nafion® 811-X, packed with 500 μm styrene-divinylbenzene copolymer beads | 160 ml/hour | 130 μl |
| 9 | 0.6 meter (2 feet) of Nafion® 811-X, packed with 500 μm styrene-divinylbenzene copolymer beads | 60 ml/hour | 50 μl |
| 10 | 0.6 meter (2 feet) of Nafion® 811-X, packed with 500 μm styrene-divinylbenzene copolymer beads immersed into a Branson B-12 ultrasonic bath | 160 ml/hour | 70 μl |
| 11 | 0.6 meter (2 feet) of Nafion® 811-X, packed with 500 μm styrene-divinylbenzene copolymer beads, the shell side of the hollow fiber packed with 250 μm styrene-divinylbenzene copolymer beads | 144 ml/hour | 50 μl |
| 12 | Device #11 immersed into a Bronson B-12 ultrasonic bath | 144 ml/hour | 70 μl |

The data in Table III show a proportional increase in maximum eluent flow rate with the length of fiber used for the various modifications tested. Compare device No. 1 with device No. 5 and device No. 8 with device No. 9. This allows the estimation of maximum eluent flow rates for different fiber lengths than actually tested. In a similar way, the data also show that bandspreading increases proportionally with increased fiber length for the various devices tested. Compare device No. 1 with device No. 5 and device No. 8 with device No. 9.

Table IV lists the estimated length of hollow fiber needed and estimated band spreading for a maximum eluent flow rate of 138 ml/hour, the eluent flow rate generally used in ion-chromatography.

TABLE IV

| Device No. | Description | Band spreading |
|---|---|---|
| 1. | 6.1 meter (20 feet) of unpacked Nafion® 811-X | 800 µl |
| 2. | 6.4 meter (21 feet) of Nafion 811-X, pinched and waved | 930 µl |
| 3. | 4.3 meter (14 feet) of Nafion 811-X, containing a 575 µm diameter wire | 380 µl |
| 4. | 3.7 meter (12 feet) of Nafion 811-X, containing a 575 µm diameter wire, waved | 430 µl |
| 5. | 4.3 meter (14 feet) of Nafion 811-X, moderate ultrasonic field | 810 µl |
| 6. | 3.4 meter (11 feet) of Nafion 811-X, stronger ultrasonic field | 980 µl |
| 7. | 1.3 meter (4.3 feet) of Nafion 811-X, packed with 500 µm diameter beads | 110 µl |
| 8. | 0.5 meter (1.7 feet) of Nafion 811-X, packed with 800 µm diameter beads and used in a moderate ultrasonic field | 60 µl |
| 9. | 0.6 meter (1.9 feet) of Nafion 811-X, packed with 500 µm diameter beads inside and 250 µm diameter beads outside the fiber | 50 µl |
| 10. | 0.6 meter (1.9 feet) of Nafion 811-X, packed with 500 µm diameter beads inside and 250 µm diameter beads outside the fiber, used in a moderate ultrasonic field | 70 µl |

The data in Table IV indicate that waving and pinching the fiber would result in no improvement in overall ·transport rates.

Table V lists the improvements observed in overall transport rates and band spreading for each of device numbers 2 to 10 described in Table IV versus the unpacked hollow fiber device used without alteration (6.1 meter (20 feet) of Nafion 811-X, unpacked).

# 0 075 371

## TABLE V

| Device No. | Device alteration | Improvement in overall transport | Improvement in band spreading |
|---|---|---|---|
| 2 | Waved and pinched | None | None |
| 3 | Wire inside hollow fiber | 1.4X | 2.1X |
| 4 | Wire inside hollow fiber, waved | 1.7X | 1.8X |
| 5 | Unpacked hollow fiber used in a moderate ultrasonic field | 1.4X | None |
| 6 | Unpacked hollow fiber used in a stronger ultrasonic field | 1.8X | None |
| 7 | Packed hollow fiber | 4.7X | 7.3X |
| 8 | Packed hollow fiber used in a moderate ultrasonic field | 12X | 13X |
| 9 | Packed hollow fiber, packed shell side | 11X | 16X |
| 10 | Packed hollow fiber, packed shell side used in a moderate ultrasonic field | 11X | 11X |

The data in Table V indicate moderate improvement in overall transport rates and reduction of band spreading with the use of wire filled hollow fiber and with the use of an ultrasonic field. Better performance was observed with the packed hollow fiber. The best performance was observed when the packed hollow fiber was used in an ultrasonic field or when the shell side was also packed.

No improvement was seen when the tube and shell packed device was used in an ultrasonic field, even though there should have been additional mixing with the use of the ultrasonic field. The probable explanation is that ions are being transported more rapidly to the membrane than it can transport. If this is true, the use of a higher performance membrane, such as a thinner membrane, would result in increased overall transport. The slight disagreement of improvement factors for the bore packed device used in an ultrasonic field and the bore and shell packed device used in an ultrasonic field was judged to be an indication of the experimental error of this work. No significant difference is ascribed to either mode of operation for Nafion® 811-X hollow fibers.

## Claims

1. A liquid chromatographic reactor (20) in which there is included a flow-through channel (22) comprising a membrane, the membrane having an affective surface portion thereof selectively exposed in the channel for the purpose of an ion exchange suppression reaction with the effluent, or for the purpose of permeating reagent through the membrane into the channel for admixing with the effluent, said flow-through channel (22) being adapted for passing through liquid chromatographic effluent to a detector (30), characterized in that a packing means (60) which is effective for reducing band spreading of eluted sample bands in said liquid effluent is disposed in the flow-through channel (22).

2. The reactor of claim 1 comprising at least one tubular membrane (22) and as the packing means (60), particles packed in the bore of the tubular membrane.

3. The reactor of claim 2 wherein the membrane consists of a single tubular membrane having an inside diameter of from 500 to 2000 μm.

4. The reactor of claim 3 in which the single tubular membrane has an inside bore diameter of from 600 to 1000 μm and wherein the packing means comprise generally spherical particles having a diameter of from 0.6 to 0.8 times as large as the bore diameter.

5. An ion chromatographic analytical instrument including an ion-exchange analytical column (10) and

13

# 0 075 371

a liquid chromatographic ion detector (30) arranged in series with a suppressor device, whereby the effluent from the analytical column with single bands resolved or partly resolved is passed through the flow-through channel of the suppressor device and thereafter conducted to the detector to measure sample band(s) of interest in the effluent, characterized in that said suppressor device (20) is the reactor of claim 1.

6. The instrument of claim 5 wherein the suppressor device (20) defines a flow-through regenerant space adjacent the surface portion of the membrane opposite its surface portion selectively exposed in the flow-through channel (22).

7. The instrument of claim 6 comprising as the membrane, a charged membrane tube having an inside bore diameter of from 500 to 2000 µm, and as the packing means (60), particles packed in the bore of the tube membrane which are from 0.6 to 0.8 as large as the bore diameter.

8. The reactor of claim 1 comprising at least one tubular ion exchange membrane and as the packing means particles (60) packed on the inside and outside of the tubular membrane.

9. The reactor of claim 1 or the ion chromatographic analytical instrument of claim 5 comprising at least one tubular ion exchange membrane and as the packing means (60) at least one elongated member positioned in the bore of the tubular membrane.

10. The reactor of claim 9, wherein the elongated member is at least one wire or a flat strip of a corrosion resistant metal.

11. The reactor of claim 10 wherein the wire or flat strip of metal are of a deformed geometrical construction selected from waving, bending, crimping, spiralation, or meshing.

12. The reactor or any one of the preceding claims, including an ultrasonic bath for applying a frequency of greater than about 20,000 cycles/seconds to the packed membrane.

13. A method of liquid chromatographic analysis wherein a sample is added to an analytical column (10) and is displaced by a liquid eluent (14), and the effluent from the analytical column (10) with sample bands chromatographically resolved or partly resolved is passed to a detector (30) through a reactor (20) which includes a flow-through channel (22) comprising a membrane having a surface portion which is selectively exposed in the flow-through channel (22) for exchanging ions with the effluent for the purpose of the suppression reaction, or for permeating reagent through the membrane for admixing with the effluent for the purpose of the reagent addition reaction and whereby within the channel a supression reaction or a reagent addition reaction is promoted to enhance the detection sensitivity of a sample band(s) of interest, characterized in that the flow-through channel which receives the effluent and conducts the effluent to the detector contains a packing means (60) to reduce sample band spreading.

14. The method of claim 13 using as the membrane an ion-exchange membrane tube the bore of which defines the flow-through channel having a bore diameter of from 500 to 2000 µm, and using as the packing means (60) particles packed in the bore of the tubular membrane having a diameter of from 0.6 to 0.8 as large as the bore diameter.

15. The method of claim 13 or 14 using a method for liquid chromatographic post-column reagent addition or suppression reaction.

16. The method of claim 13, including the step of using as the membrane an ion-exchange membrane tube and as the packing means (60) particles packed on the inside and outside of the tubular membrane.

17. The method of claim 13, including the step of using as the membrane an ion exchange membrane tube and as the packing means (60) at least one elongated member positioned in the bore of the tubular membrane.

18. The method of claim 17, including the step of selecting at least one wire or flat strip of a corrosion resistant metal as the packing means (60).

19. The method of claim 18, including the step of selecting a wire or flat strip of metal of a deformed geometrical configuration as by waving, bending, crimping, spirulation or meshing.

20. The method of any one of claims 13 to 19, including the step of applying ulstrasonic vibration to the packet membrane at a frequency of greater than 20,000 cycles/seconds.

**Patentansprüche**

1. Flüssigkeitschromatographiereaktor (20), in welchem ein Durchströmkanal (22) mit einer Membran enthalten ist, die einen wirksamen Oberflächenabschnitt aufweist, welcher wehlweise in dem Kanal ausgesetzt wird, um eine Ionenaustauschunterdrückungsreaktion mit dem Abstrom oder ein Durchdringen eines Reagenz durch die Membran in den Kanal zur Zumischung zu dem Abstrom zu bewirken, wobei der Durchströmkanal (22) für den Durchgang eines Flüssigkeitschromatographieabstroms zu einem Detektor (20) geeignet ist, dadurch gekennzeichnet, daß in dem Druchströmkanal (22) Packungsmittel (60) vorgesehen sind, die so wirken, daß die Bandspreizung der Bänder der eluierten Probe in dem Flüssigkeitsabstrom verringert wird.

2. Reaktor nach Anspruch 1, der wenigstens eine rohrförmige Membran (22) und als Packungsmittel (60) Teilchen aufweist, die in die Bohrung der rohrförmigen Membran gepackt sind.

3. Reaktor nach Anspruch 2, bei welchem die Membran aus einer einzigen rohrförmigen Membran besteht, die einen Innendurchmesser von 500 bis 2000 µm hat.

4. Reaktor nach Anspruch 3, bei welchem die einzige Rohrmembran einen Innenbohrungsdurchmesser

14

# 0 075 371

von 600 bis 1000 μm hat und bei welchem die Packungsmittel insgesamt kugelförmige Teilchen mit einem Durchmesser aufweisen, die 0,6 bis 0,8 mal so groß wie der Bohrungsdurchmesser sind.

5. Ionenchromatographieanalysegerät mit einer Ionenaustauschanalysesäule (10) und einem Flüssigkeitschromatographieionendetektor (30), die in Reihe mit einer Unterdrückungseinrichtung angeordnet sind, wobei der Abstrom aus der Analysesäule mit den aufgelösten oder teilweise aufgelösten Probenbändern durch den Durchströmkanal der Unterdrückungseinrichtung und danach zu dem Detektor geführt wird, um das interessierende Probenband bzw. die interessierenden Probenbänder in dem Abstrom auszumessen, dadurch gekennzeichnet, daß die Unterdrückungseinrichtung (20) der Reaktor von Anspruch 1 ist.

6. Gerät nach Anspruch 5, dadurch gekennzeichnet, daß die Unterdrückungseinrichtung (20) einen Durchstromregenerierungsraum angrenzend an den Oberflächenabschnitt der Membran bildet, der ihrem Oberflächenabschnitt gegenüberliegt, der wahlweise in dem Durchstromkanal ausgesetzt wird.

7. Gerät nach Anspruch 6, welches als Membran ein beladenes Membranrohr aufweist, das einen Innenbohrungsdurchmesser von 500 bis 2000 μm und als Packungsmittel (60) Teilchen aufweist, die in die Bohrung der Rohrmembran gepackt sind und 0,6 bis 0,8 mal so groß wie der Bohrungsdruchmesser sind.

8. Reaktor nach Anspruch 1 mit wenigstens einer rohrförmigen Ionenaustauschmembran und als Packungsmittel mit Teilchen (60), die auf der Innenseite und Außenseite der Rohrmembran gepackt sind.

9. Reaktor nach Anspruch 1 oder Ionenchromatographieanalysegerät nach Anspruch 5 mit wenigstens einer rohrförmigen Ionenaustauschmembran und als Packungsmittel (60) mit wenigstens einem langgestreckten Teil, das in der Bohrung der Rohrmembran angeordnet ist.

10. Reaktor nach Anspruch 9, bei welchem das langgestreckte Teil wenigstens ein Draht oder ein flacher Streifen eines korrosionswiderstandsfähigen Metalls ist.

11. Reaktor nach Anspruch 10, bei welchem der Draht oder der flache Streifen aus Metall einen verformten geometrischen Aufbau hat, der wellenförmige, gebogen, gekräuselt, spiralförmig oder siebförmig sein kann.

12. Reaktor nach einem der vorhergehenden Ansprüche mit einem Ultraschallbad zum Anlegen einer Frequenz von mehr als etwa 20000 s$^{-1}$ an die bepackte Membran.

13. Flüssigkeitschromatographieanalyseverfahren, bei welchem eine Probe einer Analysesäule (10) zugesetzt und durch ein flüssiges Eluationsmittel (14) verdrängt wird und der Abstrom aus der Analysesäule (10) mit chromatographisch aufgelösten oder teilweise aufgelösten Probenbänhern zu einem Detektor (30) durch einen Reaktor (20) geführt wird, der einen Druchströmkanal (22) mit einer Membran aufweist, welche einen Oberflächenabschnitt hat, der wahlweise in dem Druchströmkanal (22) zum Austauschen von Ionen mit dem Abstrom zum Zweck der Reaktionsunterdrückung oder für das Durchdringen eines Reagenz durch die Membran zur Zumischung zum Abstrom zum Zwecke der Reagenzzugabereaktion ausgesetzt wird, und wobei in dem Kanal eine Unterdrückungsreaktion oder eines Reaktionsmittelzugabereaktion begünstigt wird, um die Detektorempfindlichkeit des interessierenden Probenbandes bzw. der interessierenden Probenbänder zu steigern, dadurch gekennzeichnet, daß der Durchströmkanal, der den Abstrom aufnimmt und den Abstrom zum Detektor führt, Packungsmittel (60) enthält, um die Probenbandspreizung zu verringern.

14. Verfahren nach Anspruch 13, bei welchem als Membran ein Ionenaustauschmembranrohr verwendet wird, dessen Bohrung den Druchstromkanal bildet und einen Bohrungsdurchmesser von 500 bis 2000 μm hat, und bei welchem als Packungsmittel (60) Teilchen eingesetzt werden, die in die Bohrung der rohrförmigen Membran gepackt sind und einen Durchmesser haben, der 0,6 bis 0,8 mal so groß wie der Bohrungsdurchmesser ist.

15. Verfahren nach Anspruch 13 oder 14, bei welchem ein Verfahren zur Flüssigkeitschromatrographiepostsäulenreagenzzugabe oder eine Unterdrückungsreaktion verwendet wird.

16. Verfahren nach Anspruch 13 mit dem Schritt der Verwendung eines Ionenaustauschmembranrohrs als Membran und von Teilchen als Packungsmittel (60), die auf die Innenseite und Außenseite der rohrförmigen Membran gepackt sind.

17. Verfahren nach Anspruch 13 mit dem Schritt, daß als Membran ein Ionenaustauschmembranrohr und als Packungsmittel (60) wenigstens ein langgestrecktes Element verwendet wird, das in der Bohrung der rohrförmigen Membran positioniert wird.

18. Verfahren nach Ansrpuch 17 mit dem Schritt, daß wenigstens ein Draht oder ein flacher Streifen eines korrosionswiderstandsfähigen Metalls als Packungsmittel (60) gewählt wird.

19. Verfahren nach Anspruch 18 mit dem Schritt, daß ein Draht oder ein flacher Streifen aus Metall mit einer verformten geometrischen Gestalt gewählt wird, die beispielsweise durch Wellung, Biegen, Kräuseln, spiralförmige oder maschenförmige Anordnung gehalten wird.

20. Verfahren nach einem der Ansprüche 13 bis 19 mit dem Schritt, daß an die bepackte Membran eine Ultraschallvibration mit einer Frequenz von mehr als 20000 s$^{-1}$ angelegt wird.

**Revendications**

1. Réacteur (20) de chromatographie en phase liquide qui renferme un canal d'écoulement (22) comprenant une membrane, la membrane comportant une partie de surface utile mise à découvert sélectivement dans le canal pour une réaction de suppression d'échange d'ions avec l'effluent, ou pour la perméation d'un réactif à travers la membrane à l'intérieur du canal afin qu'il se mélange à l'effluent, ledit canal d'écoulement (22) étant conçu pour diriger l'effluent de chromatographie en phase liquide vers un détecteur (30), caractérisé en ce que des moyens de remplissage (60), qui on pour effet de réduire l'étalement des bandes d'élution de l'échantillon dans ledit effluent liquids, sont disposés dans le canal d'éroulement (22).

2. Réacteur selon la revendication 1, comprenant au moins une membrane tubulaire (22) et, comme moyens de remplissage (60), des particules remplissant la lumière de la membrane tubulaire.

3. Réacteur selon la revendication 2, dans lequel la membrane comprend une membrane tubulaire unique ayant un diamètre intérieur de 500 à 2000 µm.

4. Réacteur selon la revendication 3, dans lequel la membrane tubulaire unique présente un diamétre de lumière intérieure de 600 à 1000 µm, et dans lequel les moyens de remplissage comprenant des particules globalement sphériques ayant un diamètre de 0,6 à 0,8 fois le diamètre de la lumière.

5. Instrument d'analyse chromatographique par échange d'ions comprenant une colonne d'analyse par échange d'ions et un détecteur (30) d'ions par chromatographie en phase liquide agencés en série avec un dispositif suppresseur, de manière que l'effluent de la colonne d'analyse, dont les bandes d'échantillon sont résolues ou partiellement résolues, passe dans le canal d'écoulement du dispositif suppresseur et soit ensuite conduit au détecteur pour mesurer la ou les bandes d'échantillon intéressantes de l'effluent, caractérisé en ce que ledit dispositif suppresseur (20) est le réacteur de la revendication 1.

6. Instrument selon la revendication 5, dans lequel le dispositif suppresseur (20) définit un espace d'écoulement de régénérant adjacent à la partie de surface de la membrane opposée à sa partie de surface sélectivement à découvert dans le canal d'écoulement.

7. Instrument selon la revendication 6, comprenant, comme membrane, une membrane tubulaire chargée présentant un diamètre de lumière intérieure de 500 à 2000 µm et, comme moyens (60) de remplissage, les particules remplissant la lumière de la membrane tubulaire et ayant de 0,6 à 0,8 fois le diamètre de la lumière.

8. Réacteur selon la revendication 1, comprenant au moins une membrane tubulaire échangeuse d'ions et, comme moyens de remplissage, des particules (60) remplissant l'intérieur et l'extérieur de la membrane tubulaire.

9. Réacteur selon la revendication 1 ou instrument d'analyse chromatographique par échange d'ions selon la revendication 5, comprenant au moins une membrane tubulaire échangeuse d'ions, et, comme moyens (60) de remplissage, au moins un élément allongé positionné dans la lumière de la membrane tubulaire.

10. Réacteur selon la revendication 9, dans lequel l'élément allongé est au moins un fil ou un ruban plat en métal résistant à la corrosion.

11. Réacteur selon la revendication 10, dans lequel le fil ou le ruban plat en métal sont d'une construction géométrique déformée choisie parmi l'ondulation, le pliage, le gaufrage, l'enroulage en helice ou le treillissage.

12. Réacteur selon l'une quelconque des revenidcations précédentes, comprenant un bain à ultrasons pour l'application d'une fréquence supérieure à environ 20 000 cycles/seconde à la membrane remplie.

13. Procédé d'analyse par chromatographie en phase liquide, dans lequel un échantillon est introduit dans une colonne d'analyse (10) et est déplacé par un liquide d'élution (14), et l'effluent de la colonne d'analyse (10), avec des bandes d'échantillon résolues ou partiellement résolues par chromatographie, est envoyé à un détecteur (30) en passant par un réacteur (20) qui renferme un canal d'écoulement (22) comprenant une membrane ayant une partie de surface sélectivement à découvert dans le canal d'écoulement (22) pour échanger des ions avec l'effluent pour la réaction de suppression, ou pour faire passer par perméation un réactif à travers la membrane afin qu'il se mélange à l'effluent pour une réaction d'addition de réactif, et de manière, à l'intérieur du canal, qu'une réaction de suppression ou une réaction d'addition de réactif soit favorisée pour améliorer la sensibilité de la détection d'une ou de plusieurs bandes d'échantillon intéressantes, caractérisé en ce que le canal d'écoulement qui reçoit l'effluent et le conduit vers le détecteur contient des moyens (60) de remplissage destinés à réduire l'étalement des bandes d'échantillon.

14. Procédé selon la revendication 13, utilisant, comme membrane, une membrane tubulaire échangeuse d'ions dont la lumière définit le canal d'écoulement ayant un diamètre de lumière de 500 à 2000 µm, et utilisant, comme moyens (60) de remplissage, des particules remplissant la lumière de la membrane tubulaire et ayant un diamètre de 0,6 à 0,8 fois le diamètre de la lumière.

15. Procédé selon la revendication 13 ou 14, utilisant un procédé pour la réaction de suppression ou d'addition d'un réactif au-delà de la colonne de chromatographie en phase liquide.

16. Procédé selon la revendication 13, comprenant l'étape qui consiste à utiliser comme membrane une membrane tubulaire échangeuse d'ions et comme moyen de remplissage (60) des particules de remplissage sur l'interieur et l'extérieur de la membrane tubulaire.

17. Procédé selon la revendication 13, comprenant l'étape qui consiste à utiliser comme membrane une membrane tubulaire échangeuse d'ions et comme moyen (60) de remplissage au moins un élément allongé positionné dans la lumière de la membrane tubulaire.

18. Procédé selon la revendication 17, comprenant l'étape qui consiste à choisir au moins un fil ou un ruban plat en métal résistant à la corrosion comme moyen (60) de remplissage.

## 0 075 371

19. Procédé selon la revendication 18, comprenant l'étape qui consiste à choisir un fil ou un ruban plat en métal de configuration géométrique déformée telle que par ondulation, pliage, gaufrage, enroulement en hélice ou treillissage.

20. Procédé selon l'une quelconque des revendications 13 à 19, comprenant l'étape qui consiste à appliquer une vibration ultrasonore à la membrane remplie, à une fréquence supérieure à 20 000 cycles/seconds.

**Fig. 1**

**Fig. 3**

NaOH

NaHSO$_4$
Na$_2$SO$_4$

Na$^+$

OH$^-$

H$^+$

H$_2$O

SO$_4^{-2}$

H$_2$O

Fig. 2

Fig. 4

Fig. 5

Fig. 6

Fig. 7